Europäisches Patentamt

European Patent Office

Office européen des brevets

(19)

(11) Publication number: **0 114 721**
**A2**

(12) # EUROPEAN PATENT APPLICATION

(21) Application number: **84300068.8**

(22) Date of filing: **05.01.84**

(51) Int. Cl.³: **B 60 C 29/00**

(30) Priority: **17.01.83 US 458257**

(43) Date of publication of application:
**01.08.84 Bulletin 84/31**

(84) Designated Contracting States:
**DE FR GB IT SE**

(71) Applicant: **SCOVILL INC**
**500 Chase Parkway**
**Waterbury Connecticut 06708(US)**

(72) Inventor: **Kuypers, Harold Anthony**
**7916 Meadown View Drive**
**Nashville Tennessee(US)**

(74) Representative: **Allam, Peter Clerk et al,**
**LLOYD WISE, TREGEAR & CO. Norman House 105-109**
**Strand**
**London WC2R 0AE(GB)**

(54) Tire valve and low pressure indicator.

(57) A valve and low pressure indicator assembly for a pressurized container, particularly for a vehicle tire, comprises:

(a)  a tubular housing (12) having a downwardly facing seat (20) disposed in the container and a downwardly depending annular skirt (18) surrounding the seat and having an inside wall (18a) with an outward taper away from the seat;

(b)  a valve poppet (28) cooperating with the seat;

(c)  spring means (40) biasing the valve poppet away from the seat, the spring means being overcomeable by air pressure within the container to close the poppet above a pre-established pressure;

(d)  an indicator piston (42) reciprocable in the housing and having an upper portion (42a) adapted to be seen and indicate low pressure; and

(e)  a flexbile disc-like baffle means (70) extending outward adjacent the valve poppet to assist in the closing action of the poppet and normally engaging the tapered wall. The flexible disc-like baffle means (70) helps to ensure proper seating of poppet (28) and maximum flow during fill.

Croydon Printing Company Ltd.

0114721

## TIRE VALVE AND LOW PRESSURE INDICATOR

This invention relates to an integral tire valve and low pressure indicator, particularly of the type disclosed in British patent application of Harry C. Winther, published as GB 2082734A on March 10, 1982.

Such earlier valve and indicator comprises a tubular body adapted to be mounted in a rim-hole opening in an automobile wheel, for instance. The end of the body inside the tire is formed with a seat, and a valve poppet works against the seat. A spring within the tubular body urges the poppet away from the seat and an indicator piston is disposed in the tubular body above the poppet. When the tire pressure falls, the spring overcomes the pressure within the tire and drives the poppet open permitting air from the tire to enter the tubular body and force the indicator piston into a signalling position. A special advantage is that the indicator feature does not interfere with the normal functioning of gauging, filling and venting the tire valve.

The prior art also discloses a number of "add-on" indicators adapted to be threaded on to a standard tire valve and a number of elaborate signalling means, some of which involve signals on the dashboard within the vehicle.

While the valve of the aforementioned Winther application is in every way meritorious, one of the design mandates for its proper functioning is that the wall surrounding the poppet be very close to assure the proper piston action of the air in the tire against the poppet once the filling chuck is removed after filling. Such piston action is necessary to effect the seating of the poppet. Without seating, the valve is non-functional. This design mandate is in practice translated into a manufacturing requirement that is onerous in terms of strict adherence to very close predetermined tolerances with consequent expense in the form of time taken in constant dimension checking and in the form of excessive product rejection.

### SUMMARY OF THE INVENTION

The present invention enhances the reliability of the Winther-type tire valve and low pressure indicator in that the close lateral dimension requirement of the poppet and its surrounding wall is made unnecessary, and yet the adequate piston action of the tire air is maintained to assure proper resting of the poppet after the fill chuck is removed.

Under the present invention an extremely simple structure is presented as an improvement to the Winther-type valve, which assures the proper seating of the valve after the filling of the tire, automatically effects the scouring of the valve seat and adjacent area by the incoming air thereby avoiding seat leakage, and permits increased flow of air when mounting a tire so that the tire bead can be more easily set, in less time.

The invention involves the provision of a flexible baffle of generally disc shape disposed adjacent to the poppet and adapted to cooperate with a skirt surrounding the seat.

BRIEF DESCRIPTION OF THE DRAWINGS

Fig. 1 is a sectional view of a valve and low pressure indicator embodying the invention;

Fig. 2 is a bottom plan view;

Fig. 3 is a fragmentary sectional view of the lower end showing the valve in filling mode; and

Fig. 4 is a fragmentary sectional view of the lower end showing the valve with the poppet in closed position.

DESCRIPTION OF THE PREFERRED EMBODIMENT

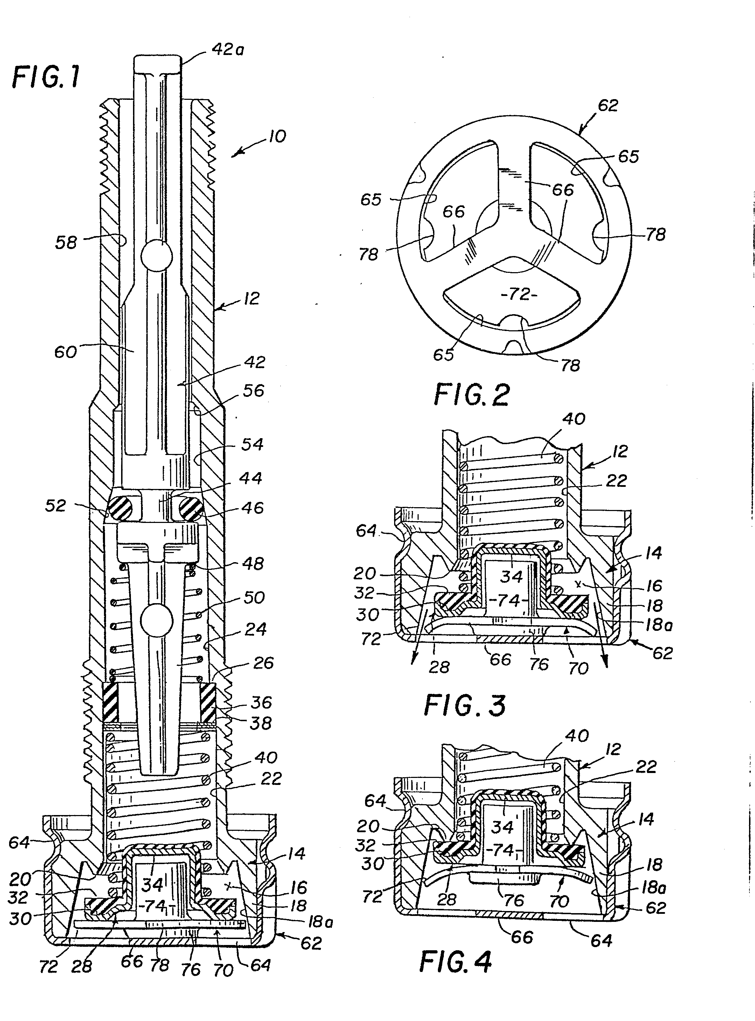

A tire valve and low pressure indicator 10 embodying the invention is shown in Fig. 1, and comprises a tubular body 12 having an enlargement 14 at its lower end, and a downwardly facing circular recess 16 defined by the depending skirt 18. Inward of the skirt the body is formed with a valve seat 20 disposed at the lower end of a bore 22. The bore abruptly reduces in diameter to an intermediate section 24, the reduction forming an annular shoulder 26. A cup-shaped valve poppet 28 is provided within the skirt 18 and is formed with an annular trough 30 in which is secured a gasket 32 adapted to engage sealingly the seat 20. The poppet is formed with a central inverted cup 34.

A spacing washer 36 of hard unyielding plastic such as high density polyethylene is disposed up against the shoulder 26, and appropriate metal shims 38 are disposed under the washer. A compression spring 40 is positioned between the poppet and the shims and urges the poppet away from the seat 20. In use, of course, pressure within the tire working against the underside of the poppet drives it up to seating position, overcoming the force of the spring 40.

Disposed within the tubular body above the poppet is an indicating piston 42 formed with a neck 44 in which an O-ring 46 is disposed. Beneath the neck the piston is formed with a downwardly facing annular shelf 48. A light second compression spring 50 is disposed between this shelf and the upper surface of the washer 36, thus holding the piston up in essentially the position shown. To permit maximum air flow, the piston is formed with an X-shaped cross section in the area 60.

As shown in Fig. 1, the central bore through the body 12 is tapered at zone 52 above the section 24, and leads to a narrower bore 54 which terminates upwardly in an annular O-ring seat 56 which surrounds and upwardly extends a uniform passage 58 to the upper end of the body.

The lower end of the valve and low pressure indicator is provided with a cup-shaped retainer 62 (Fig. 2) which is crimped as at 64 to the enlarged lower end of the valve. The retainer is formed in its bottom wall with three pie-slice shaped windows 65 leaving the radial retaining webs 66 to hold in the poppet.

The operation of the valve is quite simple. When the tire is under full pressure, the poppet is held against the seat 20. When the pressure drops, the spring 40 overcomes the force of the pressure on the bottom side of the poppet and forces the poppet open permitting air to enter the valve from the tire. This inward flowing air works upward against the downwardly facing surfaces of the indicator piston 42 and O-ring 46 to drive them both upwardly until the O-ring sits on the seat 56 sealing the valve from loss of air. The upper end 42a of the indicating piston that extends up is readily visible to signal the loss of pressure.

The indicating function of the valve does not interfere with normal gauging, filling and venting functions. Thus, filling may be accomplished by placing the filling chuck over the threaded upper end of the valve and the activating button on the chuck will be depressed by the upper end of the piston 42 which bottoms on the poppet. In deflating, with the poppet on its seat, the indicating piston may be depressed until it bottoms on the inverted cup in the center of the poppet and opens the poppet. Similarly, in gauging, the gauge can be placed over the threaded upper end of the valve, its tongue depressing the piston 42 to crack open the poppet as described.

Attention is now directed to the specific improvement to which the present invention relates.

Referring to the lower end of the valve shown in Fig. 1, a disc-like baffle 70 is disposed intermediate the poppet 28 and the retainer 62. It is preferably unitary and molded from a flexible material such as neoprene. It comprises a relatively thin disc 72 formed with a central upper boss 74 loosely disposed within the inverted cup 34 of the poppet. It also includes a central downward spacing projection 76. The periphery of the disc 72 is notched as at 78 (Fig. 2) and is proximate wall 18a. "Proximate" herein is meant to include engaging.

It will be understood that in all positions of the poppet, the boss 74 of the baffle in cooperation with cup 34 centralizes the baffle in the recess 16.

The operation of the valve baffle will now be explained. With the valve mounted in the wheel and the valve parts as shown in Fig. 1, the tire is inflated by placing a filling chuck over the threaded upper end of the valve. During filling air rushes down the inside of the valve past the outside of the O-ring 46, through the seat 20 and about the periphery of poppet 28 (Fig. 3). The baffle 70 flexes downwardly (Fig. 3) to permit the maximum flow of incoming air through the valve (see arrows). This air flow scours off the valve seat 20 and sealing surface of the gasket 32, and drives any foreign particles into the tire and away from the seat area so as not to interfere with the proper subsequent seating of the poppet.

After the tire is filled to proper pressure, the filling chuck is removed from the upper end of the valve and pressure immediately drops in the upper part of the valve causing a pressure differential across the seat 20, which drives the poppet 28 upward to close the valve as shown in Fig. 4. Simultaneously, due to the pressure drop across the O-ring 46, the indicator piston is driven upward until the O-ring rests on seat or zone 52 as shown in Fig. 1.

The presence of the baffle 70 combined with the tapered wall 18a with which the periphery or the baffle cooperates, assures that there will be sufficient time to reduce the pressure in the upper valve chambers to near atmosphere so that the indicating piston returns just to the non-indicating position shown in Fig. 1 when the filling chuck is removed. The poppet 28 with baffle 70 then assumes the position shown in Fig. 4.

More specifically, the baffle extending outward to proximate the wall 18a (Fig. 1) in the open poppet position reduces the effective back flow area between the poppet 28 outer diameter and the wall 18a, thus causing a larger pressure differential across the poppet 28 and the valve seat 20 than there would be if there were no baffle. This results in the upper chambers exhausting to atmosphere more quickly and assures an earlier and larger closing force on the poppet 28, which makes the valve operable at relatively low tire pressures.

In some instances, if the fill pressure is close to the "set" or low pressure indication pressure as determined by the strength of the spring 40, the indicator piston may be driven all the way up to the low pressure indication position when the filling chuck is removed, with the O-ring 46 resting on seat 56. If this happens, the attendant then manually presses down the top 42a of the indicator piston 42 so that it assumes the non-indicating position shown in Fig. 1.

Should the air pressure in the tire subsequently drop below the indicating pressure for which the valve is designed, the air pressure is insufficient to hold the poppet up in the position shown in Fig. 4 against the spring 40, whereby the poppet and baffle are driven down to the Fig. 1 position. This, of course, permits air to pass upward through seat 20 driving the indicator upward until the O-ring 46 rests on seat 56. The upper end of the indicator will then be visible through a transparent plastic cap (not shown) screwed on to the upper end of the valve.

During gauging or deflating operation, the indicator piston is pressed downwardly either by the gauge depressor or some other tool until the lower end of the piston abuts the top of the cup 34 and drives it downward to unseat it from seat 20. Air passes from the tire chamber through the notches 78 of the baffle 70 and up into the tire valve body to permit the desired gauging or venting. Thus the baffle 70 does not interfere with the flow of air from the tire chamber through seat 20.

It will thus be seen that for all the advantages of the improvement, the usual functions that a tire valve has, inflatability, deflatability and gaugeability, are not impeded. The advantages of the improvement comprising the addition of baffle 70 lies primarily in the assurance of the proper seating of the valve, the cleaning action of the valve seat during filling, and the increased air flow to permit proper setting of the tire bead during tire mounting.

It should be noted that the parts of the lower portions of the valve -- that is, the lower body, including the tapered wall 18a, the poppet, the baffle and the retainer -- are useful in themselves as a low-pressure-activated venting valve.

Although the invention has been particularly described in relation to a tire valve and low pressure indicator of the Winther-type, it will be appreciated by those skilled in the art that the construction disclosed provides a valve and low pressure indicator assembly useful in connection with other pressurized containers.

CLAIMS

1. In a tire valve and low pressure indicator having a tubular body (12) adapted to be mounted in the rim hole opening of a vehicle wheel, a seat (20) disposed inward of the rim in the tire chamber, a poppet (28) seating on the seat, a spring (40) in the tubular body compressively disposed against the poppet and urging it off its seat, and indicator means (42) disposed in the tubular body and adapted upon the unseating of the poppet to be driven by air coming into the tubular body away from the seat to a signal position; the improvement characterized by:

the tubular body having an annular protective skirt (18) outward from the seat, the skirt having a tapered interior wall (18a) increasing in diameter away from the seat, outwardly extending circular flexible baffle means (70) on the opposite side of the poppet from the seat, the periphery of the baffle means being proximate to the tapered wall of the skirt when the poppet is open, the baffle means flexing inwardly toward the tire chamber as air is admitted past the seat into the tire chamber to permit increased flow between the baffle means and the wall, but limiting such flow in the opposite direction to assure a proper seating of the poppet by the pressure of air in the tire chamber.

2. A tire valve as claimed in Claim 1 wherein the baffle means has notch means (78) in its periphery to pass air in the outward direction.

3. A tire valve as claimed in Claims 1 or 2 wherein the poppet has a central recess (34) and the baffle means has a central projection (74) disposed in the recess whereby the baffle means is generally centered with respect to the poppet.

4. A tire valve as claimed in Claims 1, 2 or 3 wherein a retainer (62) extends across the distal end of the wall and the baffle means has a central bump (76) on its outer surface to space the periphery of the baffle means away from the retainer.

5. A valve and low pressure indicator assembly for a pressurized container comprising:

(a) a tubular housing (12) having a downwardly facing seat (20) disposed in the container and a downwardly depending annular skirt (18) surrounding the seat and having an inside wall (18a) with an outward taper away from the seat;

(b) a valve poppet (28) cooperating with the seat;

(c) spring means (40) biasing the valve poppet away from the seat, the spring means being overcomeable by air pressure within the container to close the poppet above a pre-established pressure;

(d) an indicator piston (42) reciprocable in the housing and having an upper portion (42a) adapted to be seen and indicate low pressure; and

(e) a flexible disc-like baffle means (70) extending outward adjacent the valve poppet to assist in the closing action of the poppet and normally engaging the tapered wall.

6. A valve and low pressure indicator as claimed in Claim 5 wherein the baffle is formed with at least one notch (78) in its periphery, and wherein the poppet and baffle retainer means (62) are disposed across the skirt.

7. A low pressure activated venting valve, comprising: a tubular body (12) adapted to be mounted in a container wall and having a seat (20) disposed facing inward of the container, a poppet (28) seating on the seat, a spring (40) in the tubular body compressively disposed against the poppet and urging it off its seat, the tubular body having an annular projecting skirt (18) outward from the seat, the skirt having a tapered interior wall (18a) increasing in diameter away from the seat, and outwardly extending circular flexible baffle means (70) on the opposite side of the poppet from the seat, the periphery of the baffle means being proximate the tapered wall of the skirt when the poppet is open, the baffle means flexing inwardly away from the seat as air is admitted past the seat into the tire chamber to permit increased flow between the baffle means and the wall, but limiting such flow in the opposite direction to assure a proper seating of the poppet by the pressure of air in the tire chamber.

8. A valve as claimed in Claim 7 wherein the baffle means has notch means (78) in its periphery to pass air in the outward direction.

9. A valve as claimed in Claims 7 or 8 wherein the poppet has a central recess (34) and the baffle means has a central projection (74) disposed in the recess whereby the baffle means is generally centered with respect to the poppet, and wherein a retainer (62) extends across the distal end of the wall.

FIG.1

FIG.2

FIG.3

FIG.4